(19) Europäisches Patentamt
European Patent Office
Office européen des brevets

(11) **EP 2 298 487 A2**

(12) **EUROPÄISCHE PATENTANMELDUNG**

(43) Veröffentlichungstag:
   **23.03.2011  Patentblatt 2011/12**

(51) Int Cl.:
   **B23K 26/04** *(2006.01)*     **B25J 9/16** *(2006.01)*

(21) Anmeldenummer: **10005044.2**

(22) Anmeldetag: **12.05.2010**

(84) Benannte Vertragsstaaten:
   **AL AT BE BG CH CY CZ DE DK EE ES FI FR GB GR HR HU IE IS IT LI LT LU LV MC MK MT NL NO PL PT RO SE SI SK SM TR**
   Benannte Erstreckungsstaaten:
   **BA ME RS**

(30) Priorität: **29.05.2009  DE 102009023297**

(71) Anmelder: **KUKA Roboter GmbH**
   **86165 Augsburg (DE)**

(72) Erfinder:
   • **Strobl, Andreas**
     **86508 Rehling (DE)**
   • **Sonner, Christian**
     **80797 München (DE)**
   • **Wiedemann, Günther**
     **86368 Gersthofen (DE)**

(74) Vertreter: **Schlotter, Alexander Carolus Paul**
   **Wallinger Ricker Schlotter Foerstl**
   **Patent- und Rechtsanwälte**
   **Zweibrückenstrasse 5-7**
   **80331 München (DE)**

(54) **Verfahren und Vorrichtung zum Betrieb einer zusätzlichen Werkzeugachse eines von einem Manipulator geführten Werkzeugs**

(57)    Nach einem erfindungsgemäßen Verfahren zum Betrieb einer zusätzlichen Werkzeugachse (Z) eines von einem Manipulator, insbesondere einem Roboter (1), geführten Werkzeugs (2) werden eine Lage und/oder Orientierung des Werkzeugs im Raum durch Achsstellungen (q1 - q6) der Manipulatorachsen vorgegeben und eine Positionsgröße (f) der Werkzeugachse vorgegeben, abgespeichert und/oder angezeigt, wobei zwischen der Positionsgröße (f) und einer sie bewirkenden Achsstellung (e) der Werkzeugachse eine automatische Konvertierung durchgeführt wird.

# Fig. 2

$$\frac{1}{f} = 1/f_{3.2} + 1/[f_{3.1} - (d_0 - e)]$$

$$u = P_x(e - e_{ist})$$

EP 2 298 487 A2

**Beschreibung**

Die vorliegende Erfindung betrifft ein Verfahren und eine Vorrichtung zum Betrieb einer zusätzlichen Werkzeugachse eines Werkzeugs, welches von einem Manipulator, insbesondere einem Roboter, geführt wird.

Beispielsweise aus der US 6,787,729 B2 ist es bekannt, ein Werkzeug in Form einer Schweißzange durch einen sechsachsigen Industrieroboter zu führen. Hierdurch kann das Werkzeug - im Rahmen des Arbeitsbereichs des Roboters - in beliebige Lagen und Orientierungen im kartesischen Raum gebracht werden. Eine zusätzliche lineare Werkzeugachse ermöglicht das Schließen der Schweißzange. Die US 6,787,729 B2 schlägt vor, die Steuerung der linearen Werkzeugachse in eine Steuereinrichtung des Roboters zu integrieren, die auch die Manipulatorachsen steuert.

Aus der DE 10 2004 011 769 B3 ist es bekannt, mit einem sechsachsigen Industrieroboter einen Remote-Laserkopf zu führen, dessen Brennweite durch eine verfahrbare Lineareinheit verstellbar ist. In der Steuereinrichtung des Roboters ist ein Programm hinterlegt, das den Laserstrahl durch Bewegung der Handachsen des Roboters lenkt. Auch die DE 20 2007 018 689 U1 schlägt vor, eine Laseroptik durch Verfahren einer Achse eines Roboters zu verändern, um eine Fokusposition eines Lasers zu korrigieren.

Die Ansteuerung zusätzlicher Werkzeugachsen durch die Steuereinrichtung eines Manipulators erfolgt in der Praxis bisher allgemein dadurch, dass zunächst Soll-Achsstellungen der Werkzeugachse vorgegeben werden, beispielsweise eine Stellung eines Linearantriebs oder eine Winkellage eines Stellmotors. Dies kann beispielsweise online durch sogenanntes Teachen oder offline in Form eines editierbaren Programmcodes erfolgen. Die vorgegebenen Soll-Achsstellungen werden abgespeichert. Beim Ausführen eines solcherart abgespeicherten Arbeitsprogramms liest die Steuereinrichtung dann die abgespeicherten Soll-Achsstellungen ein und steuert einen Aktuator, zum Beispiel einen Linearantrieb oder einen Stellmotor, entsprechender dieser Soll-Achsstellungen an.

Dieses Vorgehen weist mehrere Nachteile auf, die am Beispiel des Remote-Laserschweißens verdeutlicht werden können. Zum einen hängt die Brennweite einer Fokussieroptik eines Laserkopfes von der Wellenlänge des verwendeten Lasers ab. Wird nun zum Teachen oder Prüfen eines Arbeitsprogramms ein schwächerer Pilotlaser verwendet, dessen Wellenlänge sich von der des im Arbeitsbetrieb eingesetzten Prozesslasers unterscheidet, so erfordert die Fokussierung des Pilotlasers auf ein Werkstück andere Soll-Achsstellungen des Antriebs der Fokussieroptik als die Fokussierung des Prozesslasers. Zum anderen hängt die Brennweite einer Fokussieroptik stark nicht-linear von der Achsstellung der Fokussieroptik ab. Soll also beispielsweise die Brennweite um 10 mm vergrößert werden, um einem Absatz im zu schweißenden Werkstück zu folgen, können diese 10 mm nicht einfach proportional in eine entsprechende Soll-Achsstellung umgerechnet werden, was insbesondere eine offline-Programmierung derjenigen Soll-Achsstellungen, die gerade die gewünschte Brennweite bewirken, weiter erschwert.

Mit heutigen Steuereinrichtungen, die die direkte Vorgabe von Soll-Achsstellungen vorsehen, die dann unter Berücksichtigung von Offset und Übersetzung des Werkzeugs angefahren werden, ist es daher noch nicht möglich, beliebige Werkzeugachsen optimal zu steuern, insbesondere solcher Werkzeugachsen, die einen nicht-linearen Zusammenhang mit der Achsstellung oder anderen Werkzeugparametern wie beispielsweise der Wellenlänge eines Lasers aufweisen.

Aufgabe der vorliegenden Erfindung ist es daher, den Betrieb einer zusätzlichen Werkzeugachse eines von einem Manipulator geführten Werkzeugs zu verbessern.

Diese Aufgabe wird durch ein Verfahren mit den Merkmalen des Anspruchs 1 gelöst. Anspruch 13 stellt eine Vorrichtung, Anspruch 14 bzw. 15 ein Computerprogramm bzw. ein Computerprogrammprodukt, insbesondere ein Speichermedium oder einen Datenträger, zur Durchführung eines Verfahrens nach Anspruch 1 unter Schutz. Die Unteransprüche betreffen vorteilhafte Weiterbildungen.

Erfindungsgemäß wird vorgeschlagen, Positionsgrößen einer Werkzeugachse eines von einem Manipulator geführten Werkzeugs und sie bewirkende Achsstellungen der Werkzeugachse automatisch zu konvertieren. Eine solche automatische Konvertierung kann beispielsweise die Wellenlänge eines Lasers oder einen nicht-linearen Zusammenhang zwischen der Brennweite und der Achsstellung berücksichtigen und ermöglicht so ein vorteilhaftes Teachen von robotergeführten Remote-Laserköpfen. Auf diese Weise können nach einem Aspekt der vorliegenden Erfindung prozessbezogene und anschauliche Positionsgrößen in einem Arbeits- bzw. Computerprogramm verwendet werden, was die Programmierung erleichtert, da der Anwender nun direkt die Positionsgrößen, beispielsweise die Brennweite vorgeben bzw. editieren kann. Nach einem anderen Aspekt der vorliegenden Erfindung können umgekehrt Achsstellungen der Werkzeugachse in prozessbezogener und anschaulicher Weise als Positionsgrößen angezeigt werden. Zum Beispiel kann während einer Überprüfung einer geteachten Bahn die gerade eingenommene Achsstellung einer Fokusieroptik in eine Brennweite konvertiert werden, die dem Anwender angezeigt wird.

Ein Manipulator weist allgemein eine oder mehrere, vorzugsweise wenigstens sechs Manipulatorachsen auf, beispielsweise die Drehachsen eines Knickarm- oder SCARA-Roboters oder die Linearachsen eines Portalroboters. Durch Vorgeben von Achsstellungen dieser Manipulatorachsen kann ein von dem Manipulator geführtes Werkzeug in eine gewünschte Lage und/oder Orientierung im Raum gebracht werden. Die Lage kann beispielsweise durch kartesische Koordinaten gegenüber einem Bezugsystem, die Orientierung zum Beispiel durch Euler- oder Kardan-Winkel gegenüber dem Bezugsystem angegeben werden. Als Stellung einer Achse bzw. Achsstellung wird insbesondere die Winkellage um eine Drehachse oder die Auslenkung längs einer translatorischen Achse bezeichnet, i.e. der Wert der Koordinate, die den Freiheitsgrad der Bewegungsachse beschreibt. Die Achsstellungen der Manipulatorachsen werden durch die Vorwärtskinematik des Manipulators auf die Lage und Orientierung des Werkzeugs abgebildet. Umgekehrt kann durch Rücktransformation bzw. Lösen der Rückwärtskinematik eine gewünschte Lage und/oder Orientierung des Werkzeugs, beispielsweise einer Laseroptik, im Raum auf Achsstellungen der Manipulatorachsen abgebildet und so eine Lage und/oder Orientierung des Werkzeugs im Raum durch diese Achsstellungen der Manipulatorachsen vorgegeben werden.

Das von dem Manipulator geführte Werkzeug weist demgegenüber wenigstens eine zusätzliche Werkzeugachse auf, beispielsweise die Achse eines Linearantriebs oder Stellmotors, mit der die Fokussieroptik eines Laserkopfes verstellt werden kann. Diese zusätzliche Werkzeugachse bestimmt, vorzugsweise unabhängig bzw. entkoppelt von den Manipulatorachsen, eine Positionsgröße des Werkzeugs, beispielsweise die Brennweite eines Laserkopfes bzw. seinen Abstand zu seinem Brennpunkt.

Nach einem Aspekt der vorliegenden Erfindung wird diese Positionsgröße automatisch in eine sie bewirkende Achsstellung der Werkzeugachse konvertiert und so vorgegeben, insbesondere in einem Computerprogramm abgespeichert. Auf diese Weise kann die Positionsgröße selber, beispielsweise der gewünschte kartesische Abstand eines Laserbrennpunktes zu einem Laserkopf, in einfacher Weise vorgegeben werden, etwa durch Eingabe eines entsprechenden Wertes während des Teachens, zum Beispiel über ein Handgerät, oder durch Editieren eines geteachten oder offline programmierten Arbeitsprogramms der Steuereinrichtung. Nach einem anderen Aspekt der vorliegenden Erfindung wird zusätzlich oder alternativ die Achsstellung der Werkzeugachse automatisch in die Positionsgröße, die sie bewirkt, konvertiert und diese angezeigt. Auf diese Weise kann die Positionsgröße, beispielsweise der kartesische Abstand eines Laserbrennpunktes zu einem Laserkopf, in anschaulicher und prozessspezifischer Weise angezeigt werden kann und so die Überprüfung eines Arbeitsprogramms erleichtert.

In einer bevorzugten Ausführung der vorliegenden Erfindung wird die Konvertierung der Positionsgröße und der sie bewirkenden Achsstellung in einer Steuereinrichtung des Manipulators durchgeführt. Hierzu können in der Steuereinrichtung eine oder mehrere Konvertierungseinrichtungen hard- und/oder softwaretechnisch implementiert sein. In einer bevorzugten Ausführung kann eine solche Konvertierungseinrichtung automatisch oder manuell aktiviert werden, wenn ein entsprechendes Werkzeug angeschlossen ist. Durch die wahlweise Aktivierung unterschiedlicher Konvertierungseinrichtungen bzw. unterschiedlicher Betriebsmodi einer Konvertierungseinrichtung können so Werkzeugachsen verschiedener Werkzeuge angesteuert werden.

Vorzugsweise wird die Konvertierung der Positionsgröße und der sie bewirkenden Achsstellung während des Betriebs des Manipulators durchgeführt, so dass beim Erstellen, Modifizieren oder Prüfen eines Arbeitsprogramms die anschaulicheren und prozessbezogenen Positionsgrößen genutzt, insbesondere abgespeichert und/oder angezeigt werden können.

Die Erfindung ist besonders vorteilhaft, wenn die Positionsgröße nicht-linear von der sie bewirkenden Achsstellung abhängt, wie dies etwa bei der Fokussieroptik eines manipulatorgeführten Laserkopfes der Fall ist.

Die Konvertierung der Positionsgröße in die sie bewirkende Achsstellung der Werkzeugachse kann auch von einem oder mehreren Werkzeugparametern abhängen, wie dies etwa bei der wellenlägenabhängigen Brennweite einer Fokussieroptik der Fall ist. In diesem Fall unterscheiden sich Änderungen in der Achsstellung und in der Positionsgröße voneinander, so dass insbesondere eine gewünschte Veränderung der Positionsgröße prozessspezifisch und intuitiv vorgegeben oder eine auftretende tatsächliche Veränderung der Achsstellung prozessspezifisch und intuitiv angezeigt werden kann.

Insbesondere, wenn die Positionsgröße in der Steuereinrichtung des Manipulators in die sie bewirkende Achsstellung konvertiert wird, kann diese Achsstellung der Werkzeugachse in der Steuereinrichtung überwacht werden. Hierzu kann beispielsweise überwacht werden, ob die Achsstellung der Werkzeugachse innerhalb eines vorgegebenen Bereiches liegt oder unzulässigerweise Software-Endschalter übersteigt, und/oder ob die Veränderung der Achsstellung über der Zeit, insbesondere eine Achsgeschwindigkeit oder -beschleunigung der Werkzeugachse innerhalb eines vorgegebenen Bereiches liegt oder vorgegebene Maximalwerte übersteigt. Vorzugsweise können so bereits vorhandene Achsüberwachungen in der Steuereinrichtung unverändert beibehalten werden.

Die Konvertierung hängt in einer bevorzugten Ausführung von einem oder mehreren Werkzeugparametern ab. Diese können beispielsweise durch den Anwender vorgegeben werden. Beispielsweise kann der Anwender auswählen, ob ein Pilot- oder ein Prozesslaser von dem Manipulator geführt wird. Die Konvertierung erfolgt dann auf Basis der Wellenlänge und damit des nichtlinearen Zusammenhanges zwischen der Achsstellung der Fokussieroptik und der Brennweite. Gleichermaßen kann das geführte Werkzeug auch automatisch erkannt und eine entsprechende Konvertierung ausgewählt werden.

In einer bevorzugten Ausführung wird wahlweise die Positionsgröße oder die sie bewirkenden Achsstellung der Werkzeugachse vorgegeben, abgespeichert und/oder angezeigt. Dies erhöht die Flexibilität der vorliegenden Erfindung. Beispielsweise kann ein Anwender in einer Ausführung wählen, ob direkt der Achswert, i.e. die Stellung einer Fokussieroptik, oder die dadurch vermittelte Brennweite angezeigt wird. Um Computerprogramme zu generieren, die auch von nicht erfindungsgemäßen Steuereinrichtungen abgearbeitet werden können, die nur Achswerte selber verarbeiten können, können in einer anderen bevorzugten Ausführung wahlweise auch die Achsstellung der Werkzeugachse vorgegeben, insbesondere abgespeichert werden.

Weitere Vorteile und Merkmale ergeben sich aus den Unteransprüchen und den Ausführungsbeispielen. Hierzu zeigt, teilweise schematisiert:

Fig. 1: einen Roboter bei der Laserbearbeitung nach einer Ausführung der vorliegenden Erfindung; und

Fig. 2: den Ablauf eines erfindungsgemäßen Verfahrens.

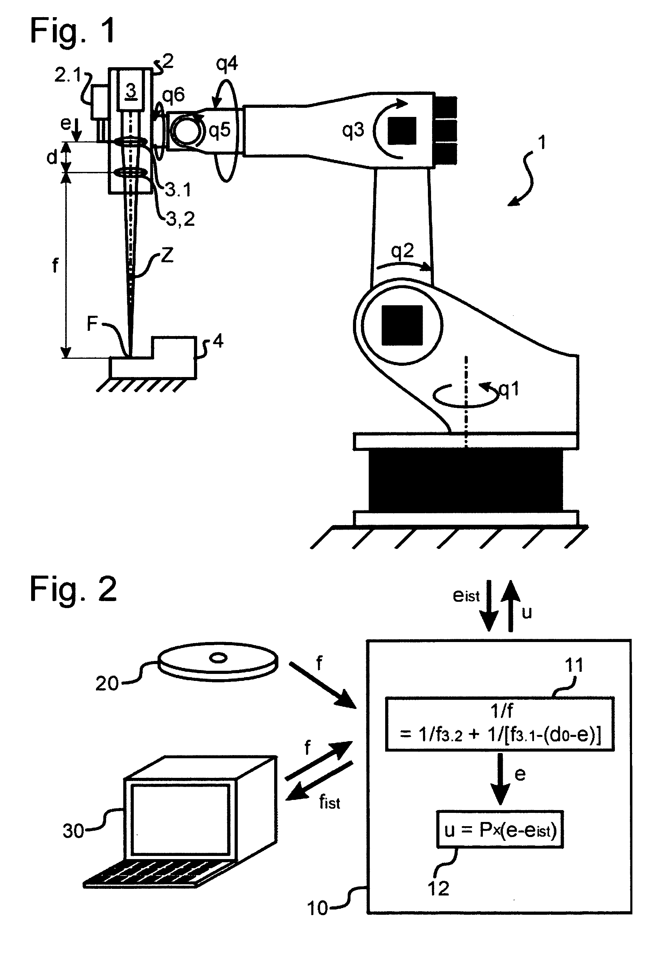

Fig. 1 zeigt einen sechsachsigen Knickarmroboter 1, dessen schwarz angedeutete Antriebsmotoren ein Karussell um einen Drehwinkel q1 gegen ein Grundgestell, eine Schwinge um einen Drehwinkel q2 gegen das Karussell, einen Arm um einen Drehwinkel q3 gegen die Schwinge und eine Zentralhand um Drehwinkel q4 bis q6 um paarweise orthogonale, einander in einem Punkt schneidende Handachsen gegen den Arm drehen. Diese Drehwinkel bzw. Achsstellungen q1,...,q6 der sechs Manipulatorachsen bestimmen die Lage und Orientierung eines Remote-Laserkopfes 2 im Raum, insbesondere die kartesischen Koordinaten seiner Austrittsblende und die Orientierung seiner optischen Achse. Durch Rückwärtstransformation einer gewünschten Lage und/oder Orientierung des Laserkopfes im Raum können die zugehörigen Achsstellungen (q1 - q6) der Manipulatorachsen bestimmt und so die Pose des Roboters 1 vorgegeben werden.

Der Remote-Laserkopf 2 weist eine Laserlichtquelle 3 auf, die in einer nicht dargestellten Abwandlung auch durch die Einkopplung von Laserlicht von einer separaten, insbesondere feststehenden Laserlichtquelle mittels eines optischen Leiters, beispielsweise eines Glasfaserkabels realisiert sein kann. Zur Fokussierung des Laserlichts, beispielsweise zum Schweißen oder Schneiden eines Werkstücks 4, in einem Brennpunkt F weist der Remote-Laserkopf 2 eine verstellbare Fokussieroptik auf, die in Fig. 1 durch eine feststehende zweite Linse 3.2 und eine demgegenüber bewegliche erste Linse 3.1 angedeutet ist. Die Brennweite f bzw. der Abstand des Brennpunktes F von der Hauptebene der zweiten Linse 3.2 hängt gemäß

$$\frac{1}{f} = \frac{1}{f_{3.2}} + \frac{1}{f_{3.1} - d}$$
$$d = d_0 - e \qquad (1)$$
$$f_{3.1} = f_{3.1}(\lambda)$$
$$f_{3.2} = f_{3.2}(\lambda)$$

mit

der Brennweite $f_{3.i}$ der iten Linse 3.1 bzw. 3.2, die von der Wellenlänge $\lambda$ des Lasers 3 abhängt; und

dem Abstand d der einander zugekehrten Hauptebenen der beiden Linsen 3.1, 3.2, der sich aus der Nulllage $d_0$ der ersten gegenüber der zweiten Linse und der Achsstellung e längs der Werkzeugachse Z des Laserkopfes 2 ergibt

nicht-linear von dem Werkzeugparameter $\lambda$ und der Achsstellung e der Werkzeugachse Z ab.

Zur Fokussierung kann die Achsstellung e der ersten Linse 3.1, i.e. ihre Position auf der optischen Achse Z, mittels eines Linear- oder Stellantriebs 2.1 des Werkzeugs 2 verstellt werden.

Zum Teachen wird der Laserkopf 2 mit einem Pilotlaser 3 bestückt und in eine gewünschte Lage und Orientierung über dem Werkstück 4 gebracht. Anschließend wird, beispielsweise über ein Eingabegerät 30 oder durch Editieren eines Arbeitsprogramms, die Brennweite f als Positionsgröße so vorgegeben, dass der Brennpunkt F auf der Werkstückoberfläche liegt. Diese Positionsgröße wird, beispielsweise in einem Arbeitsprogramm oder einer von diesem aufgerufenen Datei, auf einem Datenträger 20 abgespeichert.

Eine Steuereinrichtung 10, die einerseits die sechs Manipulatorachsen des Roboters 1 und andererseits die Werkzeugachse Z des Laserkopfes 2 steuert und hierzu von dem Antrieb 2.1 dessen Ist-Achsstellung $e_{ist}$ erhält und eine Stellgröße u, beispielsweise einen Soll-Stromwert an diesen ausgibt, weist eine Konvertierungseinrichtung 11 und eine Werkzeugachsen-Steuereinheit 12 auf. Hierzu weist die Steuereinrichtung 10 eine Schnittstelle auf, die für die Werkzeugachse Z und weitere mögliche zusätzliche Werkzeugachsen durch die Konvertierungseinrichtung 11 implementierte Umrechnungsfunktionen verwaltet.

Beispielsweise durch Eingabe durch den Anwender oder durch Erkennen des Remote-Laserkopfes 2 als angeschlossenes Werkzeug wird Konvertierungseinrichtung 11 für die Werkzeugachse Z bzw. ein entsprechender Betriebsmodus aktiviert. Dazu wird eine Konfigurationsdatei eingelesen, in der der funktionale Zusammenhang (1) hinterlegt ist. Je nachdem, ob ein Pilotlaser oder ein Prozesslaser von dem Roboter 1 geführt wird, wird dabei ein entsprechender Wert für die Wellenlänge $\lambda$ angesetzt.

Beim Abarbeiten des auf dem Datenträger 20 abgespeicherten Arbeitsprogramms erhält die Steuereinrichtung 10 die vorgegebenen Positionswerte $f_{soll}$ für die einzustellende Brennweite. Hieraus bestimmt die Konvertierungseinrichtung 11 mit (1) und dem entsprechender Wert für die Wellenlänge $\lambda$ eine Achsstellung e für die Werkzeugachse Z, i.e. eine Sollposition der ersten Linse 3.1 bzw. des Antriebs 2.1. Diese Soll-Achsstellung wird in der Werkzeugachsen-Steuereinheit 12 in einen Steuerbefehl u für den Antrieb 2.1 des Laserkopfes 2 umgesetzt, was in Fig. 2 durch einen einfachen Proportionalregler angedeutet ist.

Damit können in dem Arbeitsprogramm anschauliche, intuitiv verständliche und prozessbezogene Positionswerte in Form der gewünschten Brennweite f vorgegeben, abgespeichert und editiert werden. Die Steuereinrichtung konvertiert diese von dem verwendeten Laser unabhängigen Positionswerte entsprechend der Wellenlänge des eingesetzten Lasers und der nichtlinearen Charakteristik der Fokussieroptik in geeignete Achsstellungen e und setzt diese um. Wird beispielsweise an Stelle des Pilot- nun der eigentliche Prozesslaser verwendet, konvertiert die Konvertierungseinrichtung 11 die abgespeicherten Soll-Positionswerte des Werkzeugs, i.e. die Brennweite f des Laserkopfes 2, mit den Brennweiten $f_{3.i}(\lambda_{Prozesslaser})$ und fokussiert so trotz des Unterschiedes zum Teachen mit dem Pilotlaser auf dem Werkstück 4.

Zusätzlich oder alternativ kann, wie in Fig. 2 angedeutet, auch eine tatsächliche Achsstellung $e_{ist}$ des Antriebs 2.1 entsprechend (1) in eine damit eingestellte Brennweite $f_{ist}$ konvertiert und auf der Eingabeeinrichtung 30 angezeigt werden. Vorzugsweise kann der Anwender dabei wählen, ob die Achsstellung $e_{ist}$ oder der Positionswert $f_{ist}$ angezeigt wird.

Bezugszeichenliste

| | |
|---|---|
| 1 | Roboter |
| 2 | Werkzeug (Laserkopf) |
| 2.1 | Antrieb |
| 3 | Laser (Pilot- oder Prozesslaser) |
| 3.1 | erste (bewegliche) Linse |
| 3.2 | zweite (feststehende) Linse |
| 4 | Werkstück |
| 10 | Steuereinrichtung |
| 11 | Konvertierungseinrichtung |
| 12 | Werkzeugachsen-Steuereinheit |
| 20 | Datenträger |
| 30 | Eingabegerät |
| | |
| d | Abstand der Hauptebenen der Linsen 3.1, 3.2 |
| e | Achsstellung (Verschiebung der Linse 3.1 längs Z) |
| f | Positionswert (Brennweite) |
| F | Brennpunkt |
| q1-q6 | Manipulatorachsen |
| Z | Werkzeugachse |

**Patentansprüche**

1. Verfahren zum Betrieb einer zusätzlichen Werkzeugachse (Z) eines von einem Manipulator, insbesondere einem Roboter (1), geführten Werkzeugs (2) mit den Schritten:

   Vorgeben einer Lage und/oder Orientierung des Werkzeugs im Raum durch Achsstellungen (q1 - q6) der Manipulatorachsen; und
   Vorgeben, Abspeichern und/oder Anzeigen einer Positionsgröße (f) der Werkzeugachse;
   **gekennzeichnet durch** eine automatische Konvertierung zwischen der Positionsgröße (f) und einer sie bewirkenden Achsstellung (e) der Werkzeugachse.

2. Verfahren nach Anspruch 1, **dadurch gekennzeichnet, dass** die automatische Konvertierung in einer Steuereinrichtung (10) des Manipulators durchgeführt wird.

3. Verfahren nach einem der vorhergehenden Ansprüche, **dadurch gekennzeichnet, dass** die automatische Konvertierung während des Betriebs des Manipulators durchgeführt wird.

4. Verfahren nach einem der vorhergehenden Ansprüche, **dadurch gekennzeichnet, dass** die Positionsgröße (f) nicht-linear von der sie bewirkenden Achsstellung (e) abhängt.

5. Verfahren nach einem der vorhergehenden Ansprüche, **dadurch gekennzeichnet, dass** die Positionsgröße (f) von den Achsstellungen (q1 - q6) der Manipulatorachsen unabhängig ist.

6. Verfahren nach einem der vorhergehenden Ansprüche, **dadurch gekennzeichnet, dass** die Positionsgröße (f) eine Größe im kartesischen Raum, insbesondere ein Abstand eines Arbeitspunktes (F) oder eine Orientierung einer Arbeitsgeraden, umfasst.

7. Verfahren nach einem der vorhergehenden Ansprüche, **dadurch gekennzeichnet, dass** die Konvertierung von einem Werkzeugparameter ($\lambda$) abhängt.

8. Verfahren nach einem der vorhergehenden Ansprüche, **dadurch gekennzeichnet, dass** die Konvertierung von dem Werkzeug abhängt und hierzu ein Werkzeugparameter ($\lambda$) vorgegeben oder das vom Manipulator geführte Werkzeug automatisch erkannt wird.

9. Verfahren nach einem der vorhergehenden Ansprüche, **dadurch gekennzeichnet, dass** wahlweise die Positionsgröße (f) oder die sie bewirkenden Achsstellung (e) der Werkzeugachse vorgegeben, abgespeichert und/oder angezeigt wird.

10. Verfahren nach einem der vorhergehenden Ansprüche, **dadurch gekennzeichnet, dass** die Achsstellung (e) der Werkzeugachse überwacht wird.

11. Verfahren nach einem der vorhergehenden Ansprüche, **dadurch gekennzeichnet, dass** der Manipulator wenigstens sechs Manipulatorachsen aufweist.

12. Verfahren nach einem der vorhergehenden Ansprüche, **dadurch gekennzeichnet, dass** das Werkzeug einen Laserkopf, insbesondere einen Remote-Laserkopf (2) aufweist.

13. Steuereinrichtung (10) für einen Manipulator, insbesondere einen Roboter (1), zur Steuerung der Achsstellungen (q1,...q6, e) der Manipulatorachsen und einer zusätzlichen Werkzeugachse;
    **dadurch gekennzeichnet, dass**
    die Steuereinrichtung zur Durchführung eines Verfahrens nach einem der vorhergehenden Ansprüche eingerichtet ist.

14. Computerprogramm, dass ein Verfahren nach einem der Ansprüche 1 bis 12 ausführt, wenn es in einer Steuereinrichtung nach Anspruch 13 abläuft.

15. Computerprogrammprodukt mit Programmcode, der auf einem maschinenlesbaren Träger gespeichert ist und ein Computerprogramm nach Anspruch 14 umfasst.

# Fig. 1

# Fig. 2

$$\frac{1}{f} = \frac{1}{f_{3.2}} + \frac{1}{[f_{3.1} - (d_0 - e)]}$$

$$u = P \times (e - e_{ist})$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6787729 B2
- DE 102004011769 B3
- DE 202007018689 U1